Europäisches Patentamt

European Patent Office

Office européen des brevets

(11) Veröffentlichungsnummer: **0 447 809 A1**

## (12) EUROPÄISCHE PATENTANMELDUNG

(21) Anmeldenummer: 91102297.8

(22) Anmeldetag: 19.02.91

(51) Int. Cl.⁵: **B32B 5/08**, B32B 27/12

(30) Priorität: 02.03.90 DE 4006522

(43) Veröffentlichungstag der Anmeldung:
25.09.91 Patentblatt 91/39

(84) Benannte Vertragsstaaten:
DE NL SE

(71) Anmelder: **Bräuer, Horst, Dipl.-Ing.**
**An den Eichen 18**
**W-4294 Isselburg-Anholt(DE)**

(72) Erfinder: **Bräuer, Horst, Dipl.-Ing.**
**An den Eichen 18**
**W-4294 Isselburg-Anholt(DE)**

(54) Samtersetzendes Flächengebilde.

(57) Es wird ein samtersetzendes Flächengebilde (1) für Vorhänge und Bespannungen im Theater- und Objektbereich vorgeschlagen, das aus einem hochreißfesten Polyestergewebe (2) mit Polyvinylchloridbeschichtung (3) und einer Polyacrylbeflockung (5) gebildet ist. In Ausgestaltung der Erfindung werden anstelle des eingelegten Polyestergewebes (2) alternative Einlagen genannt.

EP 0 447 809 A1

Die Erfindung bezieht sich auf ein samtersetzendes Flächengebilde für Vorhänge und Bespannungen im Theater- und Objektbereich.

Vorhänge und Bespannungen Im Theater- und Objektbereich sollen einerseits ansprechend aussehen. Andrerseits wird von dem Flächengebilde als Vorhang im Theaterbereich erwartet, daß er zugezogen für Licht und Schall möglichst undurchlässig ist und daß er aufgezogen einen möglichst geringen Anteil der Schallenergie absorbiert. Darüberhinaus besteht der Bedarf, daß das Flächengebilde schwer entflammbar ist.

Der aus Leinen, Baumwolle, Wolle oder Seide, mit einem Flor in das jeweilige Grundgewebe eingearbeitete, bekannte Samt genügt den genannten Anforderungen nur teilweise und ist aufgrund seines aufwendigen Herstellungsverfahrens teuer.

Aufgabe der Erfindung ist es, ein samtersetzendes Flächengebilde der eingangs genannten Art anzugeben, das lichtundurchlässig ist, eine erhöhte Schalldämmung und eine verminderte Schalldämpfung aufweist und das der Norm (DIN 4102B1) über Schwerentflammbarkeit entspricht.

Die Aufgabe wird mit den Merkmalen im Kennzeichen des Patentanspruchs 1 gelöst.

Vorteilhafte Ausgestaltungen der Erfindung sind den Unteransprüchen zu entnehmen.

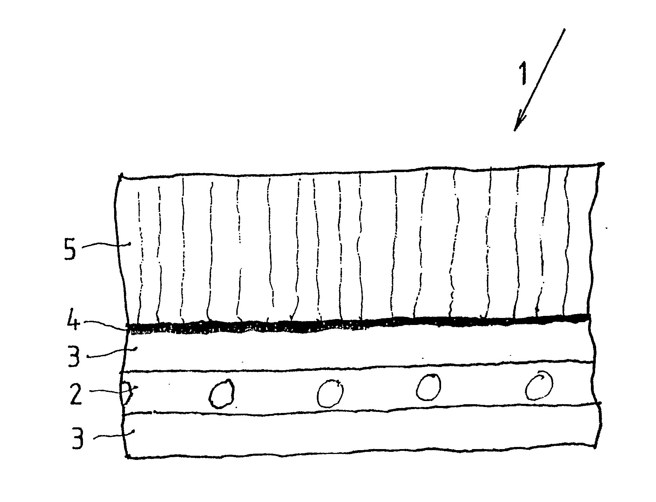

Die Erfindung ist nachstehend anhand eines in der Zeichnung dargestellten Ausführungsbeispiels näher beschrieben. Die einzige Figur der Zeichnung zeigt ein samtersetzendes Flächengebilde nach der Erfindung im Querschnitt.

Das insgesamt mit 1 bezeichnete Flächengebilde ist anstelle von Samt für Vorhänge und Bespannungen im Theater- und objektbereich vorgesehen.

Ein hochreißfestes Polyestergewebe 2 mit einem Flächengewicht von 150g/m² ist beidseitig mit Polyvinylchlorid 3 beschichtet, so daß sich ein Flächengewicht von 580 g/m² einstellt.

Auf eine der Seiten ist ein Kleber 4 aufgetragen, der nach seiner Ablüftung schwer entflammbar ist. Der aufgetragene Kleber 4 ist mit einem modifizierten Acryl 5 beflockt, das dem Flächengebilde einen Samtcharakter verleiht. Das fertige Produkt hat ein m²-bezogenes Gewicht von etwa 680 g.

Das modifizierte Acryl 5 ist ein Fertigprodukt, dessen Farbe beliebig wählbar ist.

Die Eigenschaften dieses Samtersatzes 1 sind anwendungsbezogen, d.h. als Vorhang im Theaterbereich und als Bespannung im Objektbereich, überaus vorteilhaft; der Vorhang weist eine Dämmung von 7 dB (nach DIN 52210) auf, die im Hörbereich um ± 0,25 dB schwankt, und das Schallrefelxionsmaß betragt - 4,2 dB mit einer Schwankungsbreite von 1 dB über den Hörbereich. Die Lichtdurchlässigkeit ist praktisch Null. Auch bei den Bespannungen erweist sich die Schwerentflammbarkeit des Samtersatzes als Vorteil (DIN 4102 B1).

Die Erfindung erstreckt sich auch auf Flächengebilde 1, bei denen anstelle der Einlage aus Polyestergebe 2 Schußraschelware, Vlies, Gewirke, Fadengelege oder Gestricke Verwendung finden. Hierbei ist zu beachten, daß mit der Schußraschelware ähnlich gute Ergebnisse erzielt werden können. Die anderen alternativen Einlagen 2 erweisen sich als günstiger wenn die Anforderungen an die Stabilität nicht vorrangig sind. Unter Stabilität wird die Eigenschaft verstanden, daß bei Dehnungsbelastung keine dauerhafte Verformung auftritt.

## Patentansprüche

1. Samtersetzendes Flächengebilde für Vorhänge und Bespannungen im Theater- und Objektbereich
   **gekennzeichnet durch**
   ein hochreißfestes Polyestergewebe (2) mit Polyvinylchloridbeschichtung (3) und einer Polyacrylbeflockung (5).

2. Flächengebilde nach Anspruch 1,
   **dadurch gekennzeichnet,**
   daß das Polystergewebe (2) beidseitig mit der Polyvinylchloridbeschichtung (3) versehen ist.

3. Flächengebilde nach Anspruch 1 oder 2,
   **dadurch gekennzeichnet,**
   daß die Polyacrylbeflockung (5) von einem schwer entflammbaren Kleber (4) auf der Polyvinylchloridbeschichtung (3) gehalten ist.

4. Flächengebilde insbesondere nach Anspruch 1,
   **dadurch gekennzeichnet,**
   daß anstelle des Polyestergewebes (2) eine Schußraschelware, ein Vlies, eine Wirkware, ein Gewirke, ein Fadengelege oder ein Gestricke Verwendung findet.

Europäisches
Patentamt

EUROPÄISCHER
RECHERCHENBERICHT

Nummer der Anmeldung

EP 91 10 2297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 856 598 (GREGORIAN ET AL.)<br>* Spalte 3, Zeilen 11 - 17 * * Beispiel 10 * * Spalte 7, Zeilen 30 - 36; Anspruch 1; Figur 1 *<br>– – – | 1 | B 32 B 5/08<br>B 32 B 27/12 |
| Y,A | US-A-3 674 611 (PETRY; SHORTWAY; ROCK)<br>* Spalte 5, Zeilen 4 - 6 * * Spalte 9, Zeilen 17 - 57; Ansprüche 1, 2; Figur 2 * * Beispiel I *<br>– – – | 1,3 | |
| Y,A | DE-A-1 098 913 (VEREINIGTE GLANZSTOFF-FABRIKEN AG)<br>* Spalte 2, Zeilen 44 - 54 * * Spalte 1, Zeilen 15 - 18 *<br>– – – – – | 1,4 | |

| RECHERCHIERTE SACHGEBIETE (Int. Cl.5) |
|---|
| B 32 B<br>D 04 H |

Der vorliegende Recherchenbericht wurde für alle Patentansprüche erstellt

| Recherchenort | Abschlußdatum der Recherche | Prüfer |
|---|---|---|
| Den Haag | 01 Juli 91 | DERZ T. |